# EUROPÄISCHE PATENTSCHRIFT

(11) **EP 4 614 435 B1**
(45) Veröffentlichungstag und Bekanntmachung des Hinweises auf die Patenterteilung: **14.10.2026**
(21) Anmeldenummer: 25161760.1
(22) Anmeldetag: 05.03.2025
(51) Int. Cl.: G06T 7/00

(54) **VERFAHREN ZUR DETEKTION VON ANOMALIEN BEI UMGEFORMTEN BAUTEILEN, VORRICHTUNG ZUR DATENVERARBEITUNG DES VERFAHRENS SOWIE COMPUTERPROGRAMMPRODUKT**
METHOD FOR DETECTING ANOMALIES IN SHAPED COMPONENTS, DEVICE FOR DATA PROCESSING OF THE METHOD AND COMPUTER PROGRAM PRODUCT
PROCÉDÉ DE DÉTECTION D'ANOMALIE DANS DES PIÈCES DÉFORMÉES, DISPOSITIF DE TRAITEMENT DE DONNÉES DU PROCÉDÉ ET PRODUIT PROGRAMME INFORMATIQUE

(30) Priorität: 05.03.2024 DE 102024106371; 16.09.2024 DE 102024208807
(43) Veröffentlichungstag der Anmeldung: 10.09.2025
(73) Patentinhaber: Fraunhofer-Gesellschaft zur Förderung der angewandten Forschung e.V., 80686 München (DE)
(72) Erfinder: Wiener, Thomas, 09126 Chemnitz (DE)
(74) Vertreter: Pfenning, Meinig & Partner mbB

(56) Entgegenhaltungen:
- EP-A1- 3 754 605
- CN-A- 117 575 984
- US-A1- 2020 327 655
- CAO JUNJIE ET AL: "Fabric defect inspection using prior knowledge guided least squares regression", MULTIMEDIA TOOLS AND APPLICATIONS, KLUWER ACADEMIC PUBLISHERS, BOSTON, US, vol. 76, no. 3, 17 November 2015 (2015-11-17), pages 4141 - 4157, XP036185183, ISSN: 1380-7501, [retrieved on 20151117], DOI: 10.1007/S11042-015-3041-3

## Beschreibung

Die vorliegende Erfindung betrifft ein Verfahren zur Detektion von Anomalien bei umgeformten Bauteilen, eine Vorrichtung zur Datenverarbeitung für das Verfahren sowie ein Computerprogrammprodukt zur Ausführung des Verfahrens.

Bedingt durch die steigenden Anforderungen an eine kontinuierlich hohe Produktqualität in der Automobil- und Zuliefererindustrie wächst der Bedarf nach einer lückenlosen, automatisierten Qualitätsüberwachung. Dies liegt darin begründet, dass produktionsbedingte Bauteilfehler einen immensen Kostentreiber darstellen. In der Regel gilt: Je später ein Fehler im Verlauf einer Wertschöpfungskette entdeckt wird, desto höher sind die aufgrund von Ausschuss oder Reparaturarbeiten anfallenden Kosten. Dieses Szenario trifft insbesondere auf die umformtechnische Herstellung von Struktur- und Außenhautteilen in Presswerken zu. Werden sicherheitskritische Fehler in umgeformten Blechteilen beispielsweise erst nach dem Montage- oder Lackierprozess entdeckt, müssen die entsprechenden Teile aufwendig ausgetauscht oder unter Umständen gesamte Karosserien ausgesondert werden.

Doch gerade die rauen Umgebungsbedingungen in Presswerken stellen eine Herausforderung für die Integration von Systemen zur lückenlosen, automatischen Überwachung der Bauteilqualität dar. Eine wesentliche Ursache hierfür besteht in der erschwerten Zugänglichkeit von qualitätsrelevanten Bauteileigenschaften während des Umformprozesses. An einzelnen Bereichen von Bauteilen können fehlerkritische Merkmale mit Hilfe werkzeugintegrierter Sensorik bereits während des Umformprozesses erfasst werden. Eine lückenlose Überwachung der Bauteiloberfläche mittels optischer Mess- und Prüfsysteme ist jedoch frühestens nach dem Abwurf des Bauteils auf das Pressenauslaufband möglich, da ab diesem Zeitpunkt keine Verdeckungen durch Werkzeuge oder Handling-Systeme auftreten.

Die undefinierte Lage nach dem Abwurf von Bauteilen auf das Auslaufband stellt den Entwicklungsprozess von optischen Mess- und Prüfsystemen jedoch vor neue Problemstellungen. So können die durch das Abwerfen bedingten, stochastischen Abweichungen der Bauteilposition und -orientierung bei vergleichenden Prüfverfahren Störungen hervorrufen, deren Ursachen beispielsweise in Änderungen der Reflexionsbedingungen und Schattenbildung liegen. Ferner wird die Integration von zusätzlichen Handling-Systemen zur genauen Positionierung der Prüfobjekte aufgrund von zusätzlich anfallenden Kosten oftmals vermieden. Eine wesentliche Anforderung an Prüfsysteme ist demnach die robuste Überwachung bei variierender Bauteillage.

Eine weitere, aktuell weitestgehend ungelöste Herausforderung bestehender Prüfsysteme bilden Variationen optischer Erscheinungsbilder qualitativ einwandfreier Bauteile. Beispiele hierfür sind nicht-qualitätsrelevante Änderungen des optischen Erscheinungsbildes von Strukturbauteilen, Störeinflüsse durch Beölung und schwankende optische Eigenschaften des Ausgangsmaterials. Verwechslungen zwischen qualitätsrelevanten Fehlern und Störeinflüssen bei der automatischen Prüfung werden als Pseudo-Fehler bezeichnet. Diese führen zu unnötigen Aussonderungen von Bauteilen, sogenanntem Pseudo-Ausschuss oder aufwendigen Nachkontrollen. In welchem Umfang Pseudo-Fehler von Herstellern akzeptiert werden, ist unter anderem von den mit Pseudo-Ausschuss in Verbindung stehenden Fertigungs- und Materialkosten sowie Personalkosten für die manuelle Nachkontrolle abhängig.

Ein erschwerender Faktor, welcher bei dem praktischen Einsatz von flächenabdeckenden Inline-Prüfsystemen beachtet werden muss, ist der Zusammenhang zwischen der Wahrscheinlichkeit des Auftretens von Störeinflüssen und der Größe der überwachten Bauteilfläche. Bei großen, flächendeckend überwachten Bauteilen, wie beispielsweise PKW-Seitenteilen oder -Türteilen, ist tendenziell eine höhere Wahrscheinlichkeit für das Auftreten von Fehldetektionen als bei kleineren Strukturbauteilen zu erwarten. Die Ursache hierfür stellen im Wesentlichen sporadisch auftretende Störeinflüsse in Form von Öltropfen und Verschmutzungen dar, welche theoretisch auf der gesamten Bauteiloberfläche auftreten können. Insbesondere bei großflächigen Bauteilen kann es daher erforderlich sein, einen Kompromiss zwischen akzeptabler Pseudo-Fehlerrate und überwachter Bauteilfläche zu treffen. Je zuverlässiger die Unterscheidung zwischen Oberflächenvariationen und qualitätsrelevanten Fehlern erfolgt, desto größer die Bauteiloberfläche, die unter Einhaltung einer akzeptablen Pseudo-Ausschussrate überwacht werden kann. Die zu lösenden Aufgaben bestehen daher sowohl in der zuverlässigen Unterscheidung der Variationen von qualitätsrelevanten Fehlern als auch in der Beherrschung der Komplexität, welche sich durch die Variantenvielfalt von Fehlerarten und Fehlerausprägungen ergibt.

Weiterhin spielt der zeitliche Aspekt bei der Inline-Überwachung eine entscheidende Rolle und stellt zugleich hohe Anforderungen an Prüfsysteme. Bei Produktionsraten von 12 Bauteilen pro Minute verbleiben für die Überwachung von Bauteiloberflächen an den Pressenstraßen nur wenige Sekunden. Zudem arbeiten Auslaufbänder an Pressen oftmals im getakteten Betrieb. Dabei müssen die Beschleunigungsphasen des Transportbandes durch höhere Vorlaufgeschwindigkeiten kompensiert werden, um den Prozesstakt einhalten zu können. Daraus ergibt sich die Anforderung, dass eine Inline-Prüfung der Bauteile bei üblichen Bandgeschwindigkeiten von ca. 1 m/s zuverlässige Ergebnisse liefern muss.

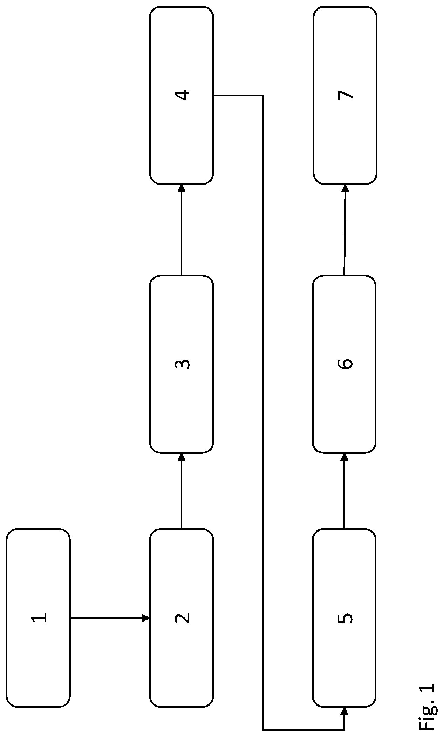

Obwohl einige der existierenden Lösungsansätze in Form von Pilotprojekten bereits in Pressenstraßen integriert wurden, erfolgt die 100 %-Qualitätskontrolle am Auslaufband von Pressen sowohl bei OEMs als auch Zulieferern nach wie vor manuell durch geschultes Personal (vgl. Abbildung 1.1). Zudem existieren keine statistisch fundierten Daten über die Zuverlässigkeit und Pseudo-Fehlerrate von bestehenden Lösungsansätzen für die flächenabdeckende Inline-Überwachung von umgeformten Blechbauteilen. Interessant für einen praktischen Einsatz von Prüfsystemen ist dabei insbesondere, inwiefern sich ein Wechsel des Ausgangsmaterials oder ein Werkzeugwechsel auf die Zuverlässigkeit und Pseudo-Fehlerrate auswirken. Hierfür ist eine Betrachtung über einen längeren Zeitraum, in welchem verschiedene Produktionschargen überwacht werden, notwendig.

Für die Überwachung von Blechbauteilen unter Einhaltung der Produktionstaktzeit im Presswerk kommen insbesondere berührungslose optische Prüfsysteme zum Einsatz. In diesem Zusammenhang kann zwischen Verfahren zur 3D-Formerfassung der Bauteiloberfläche und Verfahren zur Auswertung örtlich aufgelöster Eigenschaften des Lichtes, welches beispielsweise von der Oberfläche reflektiert wird oder diese durchdringt, unterschieden werden. Die Auswertung örtlich aufgelöster Eigenschaften des Lichtes wird fortführend unter dem Begriff 2D-Bildverarbeitung zusammengefasst. Zudem beschreibt An, Q.; Hortig, D.; Merklein, M.: Infrared thermography as a new method for quality control of sheet metal parts in the press shop. In Archives of Civil and Mechanical Engineering, 2012, 12; S. 148-155. DOI:10.1016 die aktive dynamische Thermografie als eine Methode zur Risserkennung bei Blechbauteilen.

Der vorliegenden Erfindung liegt somit die Aufgabe zugrunde, ein Verfahren vorzuschlagen, dass eine zuverlässige Detektion von Bauteilfehlern unter den im Presswerk vorherrschenden Störeinflüssen ermöglicht.

Diese Aufgabe wird erfindungsgemäß gelöst durch ein Verfahren zur Detektion von Anomalien bei umgeformten Bauteilen nach Anspruch 1, durch eine Vorrichtung zur Datenverarbeitung bei der Detektion von Anomalien nach Anspruch 9 sowie durch ein Computerprogrammprodukt nach Anspruch 10.

Bei einem Verfahren zur Detektion von Anomalien bei umgeformten Bauteilen wird a) zunächst mindestens ein erstes Bild eines Bereichs eines ersten Bauteils aufgenommen und b) anschließend das erste Bild in eine Vielzahl Blöcke unterteilt. Dann c) wird zwischen jedem Block und seinen Nachbarblöcken durch eine Distanzfunktion ein Distanzwert bestimmt und anschließend d) werden die Schritte a) bis c) für ein zweites Bild in dem gleichen Bereich eines zweiten Bauteils durchgeführt, sodass e) alle Distanzwerte zu allen Nachbarblöcken des jeweiligen Blocks in einem Distanzvektor zusammengefasst werden. Anschließend wird f) je ein ähnlichster Nachbarblock zu jedem Block aus den jeweiligen Distanzvektoren bestimmt und dann g) jeweils für den ähnlichsten Nachbarblock zu jedem Block ein Index des ähnlichsten Nachbarblocks, eine mittlere Distanz zum ähnlichsten Nachbarblock und eine Standardabweichung der Distanzfunktion zum ähnlichsten Nachbarblock gespeichert. Dann wird h) für jeden Block mit dem Index, der mittleren Distanz und der Standardabweichung ein Konfidenzintervall bestimmt und darauffolgend i) für ein Detektionsbild von einem zu detektierenden Bauteil die Schritte a) bis c) durchgeführt. Sodann wird j) überprüft, ob die ermittelten Distanzwerte für jeden Block des Detektionsbildes innerhalb des Konfidenzintervalls für den jeweiligen Block liegt, wobei, k) sofern der jeweilige Distanzwert des jeweiligen Blocks des Detektionsbilds außerhalb des jeweiligen Konfidenzintervalls liegt, diese als anomal bewertet wird.

Die Verfahrensschritte a) bis h) können als Lernphase und die Schritte i) bis k) als Detektionsphase beschrieben werden. Im Folgenden wird von der "nachbarschaftsbasierten Detektion" gesprochen, wenn zumindest die Verfahrensschritte a) bis k) umfasst werden sollen. Unter "anomal" wird jeder Block bewertet, der einen Distanzwert außerhalb des Konfidenzintervalls aufweist. Hierbei kann diesem Block dann ein Wert 1 zugeordnet werden. Dementsprechend wird jedem als "normal" bewerteten Block der Wert 0 zugeordnet. Durch dieses Verfahren ist es möglich, eine Verbesserung der Robustheit hinsichtlich prozessbedingter Störeinflüsse bei gleichbleibender Sensitivität der Fehlererkennung zu erreichen. Hierbei wird allgemein bei Störeinflüssen zwischen lagebedingten Störeinflüssen, umgebungsbedingten Störeinflüssen und prozessbedingten Störeinflüssen unterschieden. Lagebedingte Störeinflüsse können sein: Nichtreproduzierbare Bauteilerfassung durch Bauteilbewegungen, Lagevariationen und elastische Bauteilverformungen und bzw. oder Änderungen von Reflexionen und Schatten aufgrund von Lagevariationen. Zu den umgebungsbedingten Störeinflüssen können u.a. Bewegungsunschärfe durch Schwingungen, nichtreproduzierbare Bildaufnahmebedingungen durch Fremdlicht und bzw. oder ein Bandhintergrund, auf dem das Bauteil verfahren werden kann, sein. Prozessbedingte Störeinflüsse können beispielsweise eine Beölung des Bauteils, der Werkstoff des Bauteils sowie eine Änderung des optischen Erscheinungsbildes sein.

Zudem bietet die nachbarschaftsbasierte Detektion den Vorteil, dass diese linear skalierbar ist, da die Lern- und Detektionsphase für jedes Bild eines Bereichs, auch als Überwachungsbereich bezeichnet, separat durchgeführt werden.

Außerdem können die Schritte a) bis c) für eine Vielzahl an verschiedenen Bauteilen durchgeführt werden. Durch die Aufnahme von einer Vielzahl an Bildern kann die Zuverlässigkeit des Systems durch eine umfangreichere Lernphase verbessert werden.

Weiterhin kann vor Schritt b) eine Lagekompensation auf Grundlage eines Referenzbildes und einer binären Maske durchgeführt werden, wobei die binäre Maske mittels einer Vordergrund/Hintergrund-Trennung (V/H-Trennung) erzeugt wird und anschließend das Bild transformiert wird. Durch die Lagekompensation kann die Robustheit des Verfahrens gegenüber von lagebedingten Störeinflüssen verbessert werden.

Zudem kann vor Schritt c) das Bild mit einer weiteren Maske maskiert werden, die einen erweiterten Vordergrundbereich kennzeichnet und einen Hintergrundbereich ausblendet. Dadurch können Störeinflüsse, die durch den Hintergrund bestimmt werden, ausgeblendet werden und ermöglichen somit eine verbesserte Fehlerdetektion.

Außerdem kann nach Schritt b) ein Min-/Max-Pooling durchgeführt werden, sodass nur ein minimaler und ein maximaler Intensitätswert weiterverarbeitet wird. Dies reduziert die Menge an zu verarbeitenden Daten, sodass das Verfahren schneller ablaufen kann.

Zudem kann das Pooling nur auf Unterbereiche eines Blocks, insbesondere auf neun Unterbereiche des Blocks, angewendet wird. Dadurch ist es möglich, strukturelle Informationen über den Block zu erhalten, da das Pooling nicht auf den gesamten Block, sondern auf jeden Unterbereich des Blocks angewendet wird.

Weiterhin kann als Distanzfunktion der mittlere quadratische Fehler oder der mittlere absolute Fehler zwischen dem ersten Bild und dem zweiten Bild verwendet werden. Außerdem kann die mittlere Distanz zum ähnlichsten Nachbarblock und eine Standardabweichung der Distanzfunktion zum ähnlichsten Nachbarblock mithilfe der Welford-Aktualisierungsregel nach Chan, T. F.; Golub, G. H.; LeVeque, R. J.: Algorithms for computing the sample variance: Analysis and recommendations. In The American Statistician, 1983, 37; S. 242-247 und Welford, B. P.: Note on a Method for Calculating Corrected Sums of Squares and Products. In Technometrics, 1962, 4; S. 419. DOI:10.2307/1266577 berechnet werden.

Eine Vorrichtung zur Datenverarbeitung bei der Detektion von Anomalien bei umgeformten Bauteile umfasst eine Aufnahmeeinheit zur Ausführung von Schritt a), wobei zunächst mindestens ein erstes Bild eines Bereichs eines ersten Bauteils auf-genommen wird. Zudem ist eine Verarbeitungseinheit zur Ausführung von den Schritt b) bis i) vorgesehen, wobei Schritt b) das erste Bild in eine Vielzahl Blöcke unterteilt wird, bei Schritt c) zwischen jedem Block und seinen Nachbarblöcken durch eine Distanzfunktion ein Distanzwert bestimmt wird, bei Schritt d) die Schritte a) bis c) für ein zweites Bild in dem gleichen Bereich eines zweiten Bauteils durchgeführt werden, bei Schritt e) alle Distanzwerte zu allen Nachbarblöcken des jeweiligen Blocks in einem Distanzvektor zusammengefasst werden und bei Schritt f) je ein ähnlichster Nachbarblöcke zu jedem Block aus den jeweiligen Distanzvektoren bestimmt wird und bei Schritt g) jeweils für den ähnlichsten Nachbarblock zu jedem Block ein Index des ähnlichsten Nachbarblocks, eine mittlere Distanz zum ähnlichsten Nachbarblock und eine Standardabweichung der Distanzwerte zum ähnlichsten Nachbarblock gespeichert wird und bei Schritt h) für jeden Block mit dem Index, der mittleren Distanz und der Standardabweichung ein Konfidenzintervall bestimmt wird und bei Schritt i), dass für ein Detektionsbild von einem zu detektierenden Bauteil die Schritte a) bis c) durchgeführt werden. Außerdem ist eine Auswerteeinheit zur Ausführung von Schritt j) vorgesehen, wobei überprüft wird, ob die ermittelten Distanzwerte für jeden Block des Detektionsbildes innerhalb des Konfidenzintervalls für den jeweiligen Block liegen. Zudem ist eine Bewertungseinheit zur Ausführung von Schritt k) ausgebildet, wobei sofern die jeweilige Distanzfunktion des jeweiligen Blocks des Detektionsbilds außerhalb des jeweiligen Konfidenzintervalls liegt, der jeweilige Block als anomal bewertet wird.

Sofern ein Block als anomal bewertet wird, kann ein Signal, insbesondere ein optisches Signal ausgegeben werden, sodass das Bauteil, bei welchem ein anomaler Block detektiert wurde, einer Nachkontrolle unterzogen wird. Somit können Bauteilfehler schneller und mit einer höheren Präzision erkannt und anschließend fehlerhafte Bauteile aussortiert werden.

Die beschriebene Vorrichtung ist dazu geeignet, das zuvor beschriebene Verfahren durchzuführen, d.h. das Verfahren kann mit der Vorrichtung durchgeführt werden.

Ein Computerprogrammprodukt umfasst Befehle, die bei der Ausführung des Programms durch einen Computer diesen veranlassen, das zuvor beschriebene Verfahren auszuführen.

Ein Ausführungsbeispiel der Erfindung ist in den Zeichnungen dargestellt und wird nachfolgend anhand der Figuren 1 beschrieben. Wiederkehrendende Merkmale sind mit identischen Bezugszeichen versehen.

Es zeigt:
Fig. 1 einen exemplarischen Verfahrensablauf zur Detektion von Anomalien bei umgeformten Bauteilen.

Der Verfahrensablauf, im Folgenden als nachbarschaftsbasierte Detektion bezeichnet, kennzeichnet sich in diesem Ausführungsbeispiel dadurch, dass zu jeder Bildregion mindestens eine bezüglich des optischen Erscheinungsbildes ähnliche Nachbarregion gefunden werden kann. Der eigentliche Lernprozess besteht in der Ermittlung statistisch ähnlicher Nachbarregionen für eine Folge von Bildern. Eine Anomalie liegt dann vor, wenn sich die in der Regel ähnlichen Nachbarregionen signifikant voneinander unterscheiden.

Um Ähnlichkeitsbeziehungen zwischen verschiedenen Regionen eines Bildes herstellen zu können, werden die Bilder bei dem Verfahren zunächst in quadratische Blöcke *B*_{*i*,*j*} der Seitenlänge *l* unterteilt. Ein Block stellt einen Bildausschnitt eines Bildes *l* dar, wobei *i* den Zeilen- und *j* den Spaltenindex des Blockes beschreibt: ${B}_{i , j} \left(x, y\right) = I \left(x+js+{o}_{x},y+is+{o}_{y}\right) , ∀ x ∈ \left\{1,…,l\right\} , y ∈ \left\{1,…,l\right\}$

Mit s wird die Schrittweite der Blöcke und mit (*oₓ, o_{y}*) der Koordinatenursprung der Blöcke bezüglich des Bildkoordinatensystems angegeben. Gilt für die Schrittweite *s* < *l*, so überlappen die Blöcke einander. Bei der Verarbeitung von Blöcken muss die Maske *M_{c}* für die vollständige V/H-Trennung Berücksichtigung finden. Daher wird die Menge der auswertbaren Blöcke wie folgt definiert: ${B}_{c} = \left\{{B}_{i , j}:{M}_{c}\left(x+js+{o}_{x},y+is+{o}_{y}\right)>0 ∀ x∈\left\{1,…,l\right\},y∈\left\{1,…,l\right\}\right\}$

In B_{c} sind demnach nur Blöcke enthalten, welche keine maskierten Bildpunkte enthalten. Im Weiteren wird die Nachbarschaft N_{i,j} = {n₁, ... , nₚ} eines Blockes konstruiert. Ein Element beinhaltet jeweils den Zeilen- und Spaltenindex eines benachbarten Blockes. Der Wert p = 8 *l*/s gibt die Anzahl der Nachbarn an. Die Konstruktionsvorschrift lautet unter der Annahme, dass die Werte *l* und *s* Zweierpotenzen sind, wie folgt: $k = 1 , … , \frac{p}{4} : {n}_{k} = \left(i-\frac{l}{s},j-\frac{l}{s}+k-1\right)$ ${n}_{k + \frac{p}{4}} = \left(\left.i-\frac{l}{s}+k-1\right|,j-\frac{l}{s}+\frac{p}{4}\right)$ ${n}_{k + \frac{p}{2}} = \left(i-\frac{l}{s}+\frac{p}{4},j-\frac{l}{s}+\frac{p}{4}-k\right)$ ${n}_{k + \frac{3 p}{4}} = \left(i-\frac{l}{s}+\frac{p}{4}-k,j-\frac{l}{s}\right)$

Ein Nachbarblock von B_{i,j} wird mittels der Notation Bₙ mit n ∈N_{i,j} beschrieben. Eine Ähnlichkeitsbeziehung zwischen einem Block B_{i,j} und einem Nachbarblock Bₙₖ wird mit Hilfe einer Distanzfunktion d*(i, j, k) definiert, wobei das '*'-Symbol ein Platzhalter für den Typ der Distanzfunktion ist. Mit k wird der Index des Nachbarblockes bezeichnet. Ein Beispiel für eine Distanzfunktion ist der mittlere quadratische Fehler ${d}_{MSE} \left(i, j, k\right) = \frac{1}{{l}^{2}} {\sum }_{x = 1}^{l} {\sum }_{y = 1}^{l} {\left({B}_{i , j}\left(x, y\right)-{B}_{{n}_{k}}\left(x, y\right)\right)}^{2}$

### Lernphase

In der Lernphase wird zunächst die Aufnahme eines ersten Bilds 1 eines ersten Bauteils, auch allgemein als Bildaufnahme bezeichnet, durchgeführt. Anschließend wird eine Lagekompensation 2 unter Berücksichtigung einer Vordergrund/Hintergrund-Trennung, wie folgt durchgeführt:
Die anhand der CAD-Daten eines Bauteils gerenderten virtuellen Ansichten enthalten bereits alle für eine V/H-Trennung relevanten Informationen und können in der Entscheidungsfunktion v_{CAD}(x) verwendet werden. So wird während des Render-Vorgangs eine Hintergrundfarbe c_{H} in der virtuellen Ansicht Iᵥ definiert, welche nicht auf dem Bauteil vorkommt: ${v}_{CAD} \left(\vec{x}\right) = \left\{\begin{matrix}1 , & {I}_{v} \left(\vec{x}\right) \neq {c}_{h} \\ 0 , & sonst\end{matrix}\right.$

Dann wird die gegenseitige Abhängigkeit zwischen V/H-Trennung und der Lagekompensation 2 aufgelöst. Hierbei wird eine eingeschränkte V/H-Trennung Sₑ = {Vₑ, Hₑ} ermittelt. Die eingeschränkte V/H-Trennung besagt, dass sich die Bildpunkte Vₑ auch unter Lageabweichungen stets in Bereichen der Bauteiloberfläche und niemals in Hintergrundbereichen befinden. Wohingegen sich die Bildpunkte in Hₑ sowohl in Bereichen der Bauteiloberfläche als auch im Hintergrund befinden können. Die nachgelagerte Lagekompensation 2 verwendet lediglich die Bildpunkte in Vₑ.

Da die virtuelle Repräsentation eines jeweiligen Bauteilbereiches der Soll-Lage entspricht, wird die Definition von Lageabweichungen über den Radius r_{L} für die Berechnung der eingeschränkten V/H-Trennung verwendet. Hierfür ist zunächst die Umrechnung des Radius r_{L} von der Einheit Millimeter in Bildpunkte erforderlich. Dies kann unter Verwendung der in den intrinsischen Kamerakoordinaten enthaltenen Skalierungsfaktoren sₓ, s_{y}, welche im Zuge der Kalibrierung des Versuchsstandesbestimmt wurden, erfolgen. Da sich die Skalierungsfaktoren lediglich auf die Fokussierung einer Ebene beziehen, Umformteile jedoch aufgrund ihrer Geometrie unterschiedliche Abstände zwischen Oberfläche und Objektiv aufweisen, wurde für die Ermittlung der Skalierungsfaktoren der minimal zulässige Abstand zwischen Prüfobjekt und Objektiv angenommen. Unter Annahme quadratischer Bildpunkte ergibt sich der Radius wie folgt: r'_{L} = [sₓr_{L}].

Um zu erreichen, dass sich die Bildpunkte Vₑ auch unter Lageabweichungen stets innerhalb von Bereichen der Bauteiloberfläche befinden, wird die aus der Entscheidungsfunktion v(x) resultierende, binäre Maske um einen Rand der Breite r'_{L} verkleinert. Die Verkleinerung wird mit Hilfe von Erosion, einer morphologischen Operation, durchgeführt. Mit Hilfe der Erosion und eines kreisrunden Strukturelementes E mit dem Radius r'_{L} und der Entscheidungsfunktion v_{CAD} wird die Entscheidungsfunktion v_{E} zur Generierung der eingeschränkten V/H-Trennung gebildet: ${v}_{e} = {v}_{CAD} ⊖ E$

Anschließend wird das Bild transformiert 3. Im Anschluss erfolgt die Zerlegung des transformierten Bildes I_{T} in auswertbare Blöcke 4. Dabei wird für einen jeweiligen Block B_{i,j} der im Durchschnittähnlichste Nachbar über eine Folge von Bildern ermittelt. Hierfür werden die Distanzwerte 6 bzw. Distanzen zu allen Nachbarn eines Blockes in dem Vektor d_{i,j} = (d*(i, j, 1) d*(i, j, 2)...d*(i, j, k)) zusammengefasst.

In Bezug auf die Anforderung der Inline-Fähigkeit gilt es zu beachten, dass der Aufwand für die Berechnung von d_{MSE} quadratisch in Abhängigkeit von der Seitenlänge *l* steigt. Daher werden die Blöcke zunächst einer Vorverarbeitung unterzogen. Diese wird zwischen Schritt 4 und 6 durchgeführt und erfolgt mittels einer Technik, welche als Min-/Max-Pooling 5 bezeichnet wird und im Kontext von Neuronalen Netzen für die Verbesserung der Zeitkomplexität Einsatz findet. Dabei wird lediglich der minimale und maximale Intensitätswert eines Bildbereiches weiterverarbeitet. Um strukturelle Informationen zu erhalten, wird nachfolgend das Pooling 5 auf Unterbereiche eines Blockes und nicht auf einen gesamten Block angewandt. Jeder Block wird in neun Unterbereiche U1, ..., U9 unterteilt und je Bereich wird ein minimaler und maximaler Intensitätswert ermittelt. Für einen jeweiligen Block B_{i,j} wird ein 18-dimensionaler Merkmalsvektor f_{i,j} erzeugt. Die Seitenlänge eines Unterbereiches ergibt sich aus *l*/*3* mit Ausnahme der letzten Spalte und Zeile. Da die Seitenlänge der Form 2ⁿ ist und somit nicht durch 3 teilbar ist, werden die letzte Spalte und Zeile an den Blockenden abgeschnitten. Dieser Effekt ist jedoch umso geringer, je größer die Seitenlänge *l* ist. Aus der Menge der auswertbaren Blöcke B_{c} wird eine Menge der Merkmalsvektoren F_{c} erzeugt. Um weitere Rechenoperationen einzusparen, wird anstelle des mittleren quadratischen Fehlers der mittlere absolute Fehler (MAE) für die Distanzfunktion verwendet: ${d}_{MAE / Pool} \left(i, j, k\right) = \frac{1}{18} {\left‖{f}_{i , j}-{f}_{{n}_{k}}\right‖}_{1}$

In jedem Lernschritt werden die Vektoren der mittleren Distanzwerte 6 bzw. Distanzen µ_{i,j}=(µ_{i,j,1} µ_{i,j,2} ... µ_{i,j,k}) und Summen der quadratischen Abweichungen der Distanzen m_{i,j} = (m_{i,j,1} m_{i,j,2} ... m_{i,j,k}) für einen jeweiligen Block mit Hilfe der Welford-Aktualisierungsregel 7 berechnet.

Der Index des im Durchschnitt ähnlichsten Nachbars eines Blockes B_{i,j} wird nach Beendigung der Lernphase wie folgt bestimmt: ${k}_{i , j} = \hat{k} = arg {min}_{k} \left\{{μ}_{i , j , k}\right\}$

Somit wird jedem Block der bezüglich der Distanzfunktion ähnlichste Nachbarblock zugeordnet. Entsprechend werden je Block die Werte ${\hat{μ}}_{i , j} = {μ}_{i , j , \hat{k}} und {\hat{σ}}_{i , j} = \sqrt{\frac{1}{t - 1} {m}_{i , j , \hat{k}}}$ sowie der Index k_{i,j} gespeichert, wobei mit t die Anzahl der Lernschritte bezeichnet wird. Beil *σ̂_{i,j}* handelt es sich um die Standardabweichung der Distanz zu dem ähnlichsten Nachbarn des Blockes B_{i,j}.

Der Abbruch der Lernphase wird eingeleitet, sofern das Abbruchkriterium erfüllt ist. Als Kriterium für den Abbruch wird die maximale Änderung der Standardabweichungen über alle Blöcke und alle Nachbarn von Schritt t - 1 auf Schritt t verwendet: ${σ}_{i , j , k}^{\left(t\right)} = \sqrt{\frac{1}{t - 1} {m}_{i , j , k}^{\left(t\right)}}$ ${Δ}^{\left(t\right)} = {max}_{i , j , k} \left|{σ}_{i , j , k}^{\left(t\right)}-{σ}_{i , j , k}^{\left(t-1\right)}\right|$

Mit σ^{(t)}_{i,j,k} wird die Standardabweichung der Distanz des Blockes B_{i,j} zum Nachbarblock mit dem Index k des aktuellen Schrittes und mit σ^{(t-1)}_{i,j,k} die entsprechende Standardabweichung des vorhergehenden Schrittes bezeichnet. Das Konvergenzkriterium ist erfüllt, wenn für den gleitenden Mittelwert Δₗ^{(t)}und einen festgelegten Wert ε gilt: Δₗ^{(t)} ≤ ε.

Es bestehen verschiedene Möglichkeiten zur Visualisierung eines angelernten Modells. Die Vektorfelddarstellung ist vorteilhaft, um die Richtungen der benachbarten Blöcke aufzuzeigen. Dabei werden nur Blöcke dargestellt, welche sich nicht gegenseitig überlappen. Eine weitere Form der Visualisierung ist die Falschfarbendarstellung von Verbindungen zwischen ähnlichen Blöcken. Dabei wird die Standardabweichung der Verbindungslinie farbig codiert. Hierdurch können Bereiche mit geringer Sensitivität identifiziert werden.

### Detektionsphase

In der Detektionsphase erfolgt die Vorverarbeitung einschließlich der Zerlegung in Blöcke identisch zu der Lernphase. Die Detektion von Anomalien wird blockweise mittels des angelernten Modells L_{i,j} für einen jeweiligen Block B_{i,j} durchgeführt. Ein Block wird dabei entweder als anomal oder normal bewertet. Das Ergebnis der Bewertung wird in einer Matrix mit den Einträgen a_{i,j} gespeichert. Die Einträge a_{i,j} werden für alle Vektoren f_{i,j} ∈ F_{c} wie folgt berechnet: ${a}_{i , j} = \left\{\begin{matrix}1 , & \left|{d}_{MAE / Pool}\left(i, j, {k}_{i , j}\right)-{\hat{μ}}_{i , j}\right| > a {\hat{σ}}_{i , j} + r \\ 0 , & sonst\end{matrix}\right.$

Ein Wert a_{i,j} = 1 zeigt an, dass der Block B_{i,j} als anomal bewertet wird. Entsprechend wird der Block bei einem Wert a_{i,j} = 0 als normal bewertet.

Die Standardabweichung liefert Aufschluss über die Sensitivität der Detektion. Entsprechend kann die Sensitivität ebenfalls mit Hilfe der Parameter a und r beeinflusst werden. Die Anomaliedetektion wird nur für auswertbare Blöcke durchgeführt, welche anhand der vollständigen V/H-Trennung ermittelt wurden. Bei der Ergebnisvisualisierung werden lediglich Blöcke dargestellt, welche als anomal detektiert wurden.

## Patentansprüche

1. Computerimplementiertes Verfahren zur Detektion von Anomalien bei umgeformten Bauteilen, bei dem
a) zunächst mindestens ein erstes Bild (1) eines Bereichs eines ersten Bauteils aufgenommen wird und anschließend
b) das erste Bild (1) in eine Vielzahl Blöcke unterteilt wird, wobei das Verfahren **dadurch gekennzeichnet ist, dass** dann
c) zwischen jedem Block und seinen Nachbarblöcken durch eine Distanzfunktion ein Distanzwert bestimmt wird (6) und anschließend
d) die Schritte a) bis c) für ein zweites Bild in dem gleichen Bereich eines zweiten Bauteils durchgeführt werden, sodass
e) alle Distanzwerte zu allen Nachbarblöcken des jeweiligen Blocks in einem Distanzvektor zusammengefasst werden und anschließend
f) je ein ähnlichster Nachbarblock zu jedem Block aus den jeweiligen Distanzvektoren bestimmt wird und dann
g) jeweils für den ähnlichsten Nachbarblock zu jedem Block ein Index des ähnlichsten Nachbarblocks, eine mittlere Distanz zum ähnlichsten Nachbarblock und eine Standardabweichung der jedes der Distanzwerte zum ähnlichsten Nachbarblock gespeichert wird und anschließend
h) für jeden Block mit dem Index, der mittleren Distanz und der Standardabweichung ein Konfidenzintervall bestimmt wird und dann
i) für ein Detektionsbild von einem zu detektierenden Bauteil die Schritte a) bis c) durchgeführt werden und dann
j) überprüft wird, ob die ermittelten Distanzwerte für jeden Block des Detektionsbildes innerhalb des Konfidenzintervalls für den jeweiligen Block liegt, wobei,
k) sofern der jeweilige Distanzwert des jeweiligen Blocks des Detektionsbilds außerhalb des jeweiligen Konfidenzintervalls liegt, diese als anomal bewertet wird.

2. Verfahren zur Detektion von Anomalien bei umgeformten Bauteilen nach Anspruch 1, **dadurch gekennzeichnet, dass** die Schritte a) bis c) für eine Vielzahl an verschiedenen Bauteilen durchgeführt werden.

3. Verfahren zur Detektion von Anomalien bei umgeformten Bauteilen nach einem der vorherigen Ansprüche, **dadurch gekennzeichnet, dass** vor Schritt b) eine Lagekompensation (2) auf Grundlage eines Referenzbildes und einer binären Maske durchgeführt wird, wobei die binäre Maske mittels einer Vordergrund/Hintergrund-Trennung erzeugt wird und anschließend das Bild transformiert wird (3).

4. Verfahren zur Detektion von Anomalien bei umgeformten Bauteilen nach einem der vorherigen Ansprüche, **dadurch gekennzeichnet, dass** vor Schritt c) das Bild mit einer weiteren Maske maskiert wird, die einen erweiterten Vordergrundbereich kennzeichnet und einen Hintergrundbereich ausblendet.

5. Verfahren zur Detektion von Anomalien bei umgeformten Bauteilen nach einem der vorherigen Ansprüche, **dadurch gekennzeichnet, dass** nach Schritt b) ein Min-/Max-Pooling (5) durchgeführt wird, sodass nur ein minimaler und ein maximaler Intensitätswert weiterverarbeitet wird.

6. Verfahren zur Detektion von Anomalien bei umgeformten Bauteilen nach Anspruch 5, **dadurch gekennzeichnet, dass** das Pooling (5) nur auf Unterbereiche eines Blocks, insbesondere auf neun Unterbereiche des Blocks, angewendet wird.

7. Verfahren zur Detektion von Anomalien bei umgeformten Bauteilen nach einem der vorherigen Ansprüche, **dadurch gekennzeichnet, dass** als Distanzfunktion der mittlere quadratische Fehler oder der mittlere absolute Fehler zwischen dem ersten Bild und dem zweiten Bild verwendet wird.

8. Verfahren zur Detektion von Anomalien bei umgeformten Bauteilen nach einem der vorherigen Ansprüche, **dadurch gekennzeichnet, dass** mittlere Distanz zum ähnlichsten Nachbarblock und eine Standardabweichung der Distanzfunktion zum ähnlichsten Nachbarblock mithilfe der Welford-Aktualisierungsregel (7) berechnet werden.

9. Vorrichtung zur Datenverarbeitung bei der Detektion von Anomalien bei umgeformten Bauteile umfasst
eine Aufnahmeeinheit zur Ausführung von Schritt a), wobei zunächst mindestens ein erstes Bild eines Bereichs eines ersten Bauteils aufgenommen wird,
eine Verarbeitungseinheit zur Ausführung von den Schritt b) bis i), wobei Schritt b) das erste Bild (1) in eine Vielzahl Blöcke unterteilt wird (4),
bei Schritt c) zwischen jedem Block und seinen Nachbarblöcken durch eine Distanzfunktion ein Distanzwert bestimmt wird (6),
bei Schritt d) die Schritte a) bis c) für ein zweites Bild in dem gleichen Bereich eines zweiten Bauteils durchgeführt werden,
bei Schritt e) alle Distanzwerte zu allen Nachbarblöcken des jeweiligen Blocks in einem Distanzvektor zusammengefasst werden und
bei Schritt f) je ein ähnlichster Nachbarblock zu jedem Block aus den jeweiligen Distanzvektoren bestimmt wird und
bei Schritt g) jeweils für den ähnlichsten Nachbarblock zu jedem Block ein Index des ähnlichsten Nachbarblocks, eine mittlere Distanz zum ähnlichsten Nachbarblock und eine Standardabweichung der Distanzfunktion zum ähnlichsten Nachbarblock gespeichert wird und
bei Schritt h) für jeden Block mit dem Index, der mittleren Distanz und der Standardabweichung ein Konfidenzintervall bestimmt wird und
bei Schritt i), dass für ein Detektionsbild von einem zu detektierenden Bauteil die Schritte a) bis c) durchgeführt werden,
eine Auswerteeinheit zur Ausführung von Schritt j), wobei überprüft wird, ob die ermittelten Distanzwerte für jeden Block des Detektionsbildes innerhalb des Konfidenzintervalls für den jeweiligen Block liegt und
eine Bewertungseinheit zur Ausführung von Schritt k), wobei sofern der jeweilige Distanzwert des jeweiligen Blocks des Detektionsbilds außerhalb des jeweiligen Konfidenzintervalls liegt, als anomal bewertet wird.

10. Computerprogrammprodukt, umfassend Befehle, die bei der Ausführung des Programms durch einen Computer diesen veranlassen, das Verfahren nach einem der Ansprüche 1 - 8 auszuführen.

## Claims

1. A computer-implemented method for detecting anomalies in formed components,
in which
a) first, at least one initial image (1) of a region of a first component is captured, and then
b) the first image (1) is divided into a plurality of blocks, wherein the method is **characterized in that** then
c) a distance value is determined between each block and its neighboring blocks using a distance function (6), and then
d) steps a) through c) are performed for a second image in the same region of a second component, so that
e) all distance values to all neighboring blocks of the respective block are combined into a distance vector, and then
f) the closest neighboring block for each block is determined from the respective distance vectors, and then
g) for the closest neighboring block for each block, an index of the most similar neighboring block, a mean distance to the most similar neighboring block, and a standard deviation of each of the distance values to the most similar neighboring block are stored, and then
h) a confidence interval is determined for each block based on the index, the mean distance, and the standard deviation, and then
i) steps a) through c) are performed for a detection image of a component to be detected, and then
j) it is checked whether the calculated distance values for each block of the detection image fall within the confidence interval for the respective block, wherein,
k) if the distance value of a given block in the detection image lies outside the corresponding confidence interval, that block is classified as anomalous.

2. The method for detecting anomalies in formed components according to claim 1, **characterized in that** steps a) through c) are performed on a plurality of different components.

3. The method for detecting anomalies in formed components according to one of the preceding claims, **characterized in that**, prior to step b), a position compensation (2) is performed based on a reference image and a binary mask, wherein the binary mask is generated by means of foreground/background separation and the image is subsequently transformed (3).

4. The method for detecting anomalies in formed components according to one of the preceding claims, **characterized in that**, prior to step c), the image is masked using an additional mask that identifies an expanded foreground area and masks out a background area.

5. The method for detecting anomalies in formed components according to one of the preceding claims, **characterized in that**, following step b), min/max pooling (5) is performed so that only a minimum and a maximum intensity value are processed further.

6. The method for detecting anomalies in formed components according to claim 5, **characterized in that** pooling (5) is applied only to subregions of a block, specifically to nine subregions of the block.

7. The method for detecting anomalies in formed components according to one of the preceding claims, **characterized in that** the mean squared error or the mean absolute error between the first image and the second image is used as the distance function.

8. The method for detecting anomalies in formed components according to one of the preceding claims, **characterized in that** the average distance to the closest neighbor block and a standard deviation of the distance function to the closest neighbor block are calculated using the Welford update rule (7).

9. A device for data processing in the detection of anomalies in formed components, comprising
an imaging unit for performing step a), wherein at least a first image of a region of a first component is first captured,
a processing unit for performing steps b) through i), wherein step b) involves dividing the first image (1) into a plurality of blocks (4),
in step c), a distance value is determined between each block and its neighboring blocks using a distance function (6),
in step d), steps a) through c) are performed for a second image in the same area of a second component,
in step e), all distance values to all neighboring blocks of the respective block are combined into a distance vector, and
in step f), the closest neighbor block for each block is determined from the respective distance vectors, and
in step g), for the closest neighbor block for each block, an index of the most similar neighboring block, an average distance to the most similar neighboring block, and a standard deviation of the distance function to the most similar neighboring block are stored; and
in step h), a confidence interval is determined for each block using the index, the mean distance, and the standard deviation, and
in step i), that steps a) through c) are performed for a detection image of a component to be detected,
a processing unit for performing step j), which checks whether the determined distance values for each block of the detection image fall within the confidence interval for the respective block, and
an evaluation unit for performing step k), wherein if the respective distance value of the respective block of the detection image lies outside the respective confidence interval, it is evaluated as anomalous.

10. A computer program product comprising instructions that, when the program is executed by a computer, cause the computer to perform the method according to any one of claims 1 through 8.

## Revendications

1. Procédé, mis en œuvre par ordinateur, de détection d'anomalies chez des composants transformés,
dans lequel
a) au moins une première image (1) d'une région d'un premier composant est d'abord enregistrée, puis
b) la première image (1) est divisée en une pluralité de blocs, le procédé étant **caractérisé en ce qu'**ensuite
c) une valeur de distance est déterminée (6) entre chaque bloc et ses blocs voisins grâce à une fonction de distance, puis
d) les étapes a) à c) sont mises en œuvre pour une seconde image dans la même région d'un second composant, de sorte que
e) toutes les valeurs de distance par rapport à tous les blocs voisins du bloc respectif sont combinées en un vecteur de distance, puis
f) le bloc voisin le plus similaire à chaque bloc est déterminé à partir des vecteurs de distance respectifs, puis
g) respectivement pour chaque bloc voisin le plus similaire à chaque bloc, l'indice du bloc voisin le plus similaire, la distance moyenne par rapport à ce bloc et l'écart type de chacune des valeurs de distance par rapport audit bloc voisin le plus similaire sont mémorisés, puis
h) un intervalle de confiance est déterminé pour chaque bloc à l'aide de l'indice, de la distance moyenne et de l'écart type, puis
i) pour une image de détection d'un composant à détecter, les étapes a) à c) sont mises en œuvre, puis
j) on vérifie si les valeurs de distance déterminées pour chaque bloc de l'image de détection se situent dans l'intervalle de confiance du bloc respectif,
k) dans lequel la valeur de distance respective du bloc respectif de l'image de détection est considérée comme anormale dans la mesure où elle se situe en dehors de l'intervalle de confiance respectif.

2. Procédé de détection d'anomalies chez des composants transformés selon la revendication 1, **caractérisé en ce que** les étapes a) à c) sont mises en œuvre pour une pluralité de composants différents.

3. Procédé de détection d'anomalies chez des composants transformés selon l'une quelconque des revendications précédentes, **caractérisé en ce que**, avant l'étape b), une compensation de position (2) est mise en œuvre en se basant sur une image de référence et sur un masque binaire, dans lequel le masque binaire est généré au moyen d'une séparation premier plan/arrière-plan et l'image est ensuite transformée (3).

4. Procédé de détection d'anomalies chez des composants transformés selon l'une quelconque des revendications précédentes, **caractérisé en ce que**, avant l'étape c), l'image est masquée par un masque supplémentaire qui définit une région de premier plan étendue et masque une région d'arrière-plan.

5. Procédé de détection d'anomalies chez des composants transformés selon l'une quelconque des revendications précédentes, **caractérisé en ce que**, après l'étape b), un regroupement min/max (5) est mis en œuvre, de sorte que seules une valeur d'intensité minimale et une valeur d'intensité maximale sont traitées ultérieurement.

6. Procédé de détection d'anomalies chez des composants transformés selon la revendication 5, **caractérisé en ce que** le regroupement (5) n'est appliquée qu'à des sous-régions d'un bloc, en particulier à neuf sous-régions du bloc.

7. Procédé de détection d'anomalies chez des composants transformés selon l'une quelconque des revendications précédentes, **caractérisé en ce que** l'erreur quadratique moyenne ou l'erreur absolue moyenne entre la première image et la seconde image est utilisée comme fonction de distance.

8. Procédé de détection d'anomalies chez des composants transformés selon l'une quelconque des revendications précédentes, **caractérisé en ce que** la distance moyenne par rapport au bloc voisin le plus similaire et un écart type de la fonction de distance par rapport au bloc voisin le plus similaire sont calculés à l'aide de la règle de mise à jour de Welford (7).

9. Dispositif de traitement des données lors de la détection d'anomalies chez des composants transformés, comprenant
une unité d'enregistrement permettant de mettre en œuvre l'étape a), dans lequel au moins une première image d'une région d'un premier composant est enregistrée,
une unité de traitement permettant de mettre en œuvre les étapes b) à i), dans lequel l'étape b) divise la première image (1) en une pluralité de blocs (4),
à l'étape c), une valeur de distance est déterminée entre chaque bloc et ses blocs voisins grâce à une fonction de distance (6),
à l'étape d), les étapes a) à c) sont mises en œuvre pour une seconde image dans la même région d'un second composant,
à l'étape e), toutes les valeurs de distance par rapport à tous les blocs voisins du bloc respectif sont combinées en un vecteur de distance et
à l'étape f), le bloc voisin le plus similaire à chaque bloc est déterminé à partir des vecteurs de distance respectifs et
à l'étape g), respectivement pour le bloc voisin le plus similaire à chaque bloc, un indice du bloc voisin le plus similaire, une distance moyenne par rapport au bloc voisin le plus similaire et un écart type de la fonction de distance par rapport au bloc voisin le plus similaire sont stockés et
à l'étape h), un intervalle de confiance est déterminé pour chaque bloc à l'aide de l'indice, de la distance moyenne et de l'écart type, et
à l'étape i), pour une image de détection d'un composant à détecter, les étapes a) à c) sont mises en œuvre,
une unité d'évaluation permettant de mettre en œuvre l'étape j), dans lequel on vérifie si les valeurs de distance déterminées pour chaque bloc de l'image de détection se situent dans l'intervalle de confiance pour le bloc respectif et
une unité d'évaluation permettant de mettre en œuvre l'étape k), dans lequel la valeur de distance respective du bloc respectif de l'image de détection est considérée comme anormale dans la mesure où elle se situe en dehors de l'intervalle de confiance respectif.

10. Produit-programme informatique, comprenant des instructions qui, lorsque le programme est exécuté par un ordinateur, lui font mettre en œuvre le procédé selon l'une quelconque des revendications 1 à 8.
